# EUROPEAN PATENT APPLICATION

(11) **EP 1 280 356 A2**
(43) Date of publication of application: **29.01.2003**
(21) Application number: 02253873.0
(22) Date of filing: 31.05.2002
(51) Int. Cl.: H04N 7/24

(54) **Apparatus and method for compressing multiplexed video signals**

(30) Priority: 23.07.2001 KR 2001044225
(71) Applicant: SAMSUNG ELECTRONICS CO., LTD., Suwon-City, Kyungki-do (KR)
(72) Inventor: Park, Goo-man, Gangbuk-gu, Seoul (KR); Jang, Jung-whan, Songpa-gu, Seoul (KR); Kang, Goo-ho, Paldal-gu, Suwon-city, Gyunggi-do (KR)
(74) Representative: Geary, Stuart Lloyd

(57) **Abstract**

A method and apparatus for compressing multiplexed video data increases compression efficiency by using MPEG coding and ensuring that the difference determining process of the MPEG coding generally involves frames from the same signal source. This is achieved by making the multiplexed signal bursty or using different prediction memories for each signal source.

## Description

The present invention relates to a method and apparatus for producing a compressed multiplexed video signal.

MPEG coding of moving image signals is a well-known standard and uses a combination of discrete cosine transform encoding and movement compensation prediction encoding. With this a high degree of compression can be obtained when the similarity between successive frames is high. For example, when encoding consecutive frames from a camera using the MPEG method, a high degree of compression is obtained since the similarity between adjacent frames is high. However, when the image signals are input in turn from a plurality of input channels, the similarity of adjacent image information is low and the MPEG encoding method loses efficiency.

There is a security system that supports multi-channel viewing where image signals in turn are received in turn from a plurality of input signals.

The multi-channel security system cyclically selects images from different cameras through a plurality of channels and records and displays the images. For example, when establishing a system capable of displaying image signals from four cameras, the multi-channel security system cyclically selects the four channels, displays the image signals for each channel in turn on a display device and records the image signals.

However, these systems mostly apply wavelet or JPEG (Joint Photographic Experts Group) compression methods that independently encode each frame. In the above-mentioned conventional multi-channel encoding system, if MPEG compression were to be used, it would be hard to obtain good compression.

A method according to the present invention is characterised by performing MPEG coding of a multiplexed video signal such that the difference determining step of the MPEG coding always or predominantly involves frames from the same source.

In one form, the multiplexed video signal comprises bursts of frames from each source in turn and, preferably, the method comprises cyclically storing frames of video signals from different sources in memories associated with respective ones of said sources and cyclically outputting said bursts of frames from said memories.

In another form, the method comprises storing separate predictions for signals from each source and selecting the stored prediction corresponding to the source of the current frame for said difference determining step. Preferably, this form comprises determining the degree of similarity between a current frame and the previous frame from the same source and, if the similarity does not meet a predetermined criteria, performing an alternative self-contained compression method, e.g. wavelet or JPEG, on the current frame instead of said MPEG coding. The self-contained compression method does not refer to other frames for the compression of the current frame. More preferably, this form includes adding a code to the compressed multiplexed video signal to indicate which compressing method is being used.

An apparatus according to the present invention is characterised by an MPEG coder and memory means configured for grouping video frame data according to source for the difference determining operating of the MPEG coder.

In one form, the apparatus includes a multiplexer, the memory means is configured for storing a plurality of frames from respective ones of said sources and the multiplexer is configured to select each memory means for sufficient time to allow for the output of a burst of frames therefrom to the MPEG coder.

In another form, the memory means constitutes prediction memories of the MPEG coder, there being a respective prediction memory for each of said sources and means for selecting a prediction memory in dependence on the source of the current frame for providing a signal to the difference determining operation of the MPEG coder. Preferably, there is also similarity determining means for determining the degree of similarity between a current frame and the previous frame from the same source, additional coding means for performing a self-contained compression method, and coding selection means for selecting between said MPEG coder and said additional coding means in dependence on the output of the similarity determining means. The MPEG coder and the additional coding means may be implement by the same hardware, e.g. a DSP device, operating under different program control. More preferably, the coding selection means is configured to generate a code for indicating which compressing method is being used.

Embodiments of the present invention will now be described, by way of example, with reference to the accompanying drawings, in which:-
Figure 1 is a block diagram of a first multi-channel image encoding apparatus according to the present invention;
Figure 2 is a block diagram showing the frame buffers of Figure 1 in detail;
Figure 3 is a flowchart illustrating the operation of the multi-channel image encoding apparatus of Figure 1;
Figure 4 is a block diagram of a second multi-channel image encoding apparatus according to the present invention;
Figure 5 is a block diagram of a third multi-channel image encoding apparatus according to the present invention;
Figure 6 is a flowchart illustrating the operation of the multi-channel image encoding apparatus of Figure 5; and
Figures 7A through 7C are views illustrating the encoding procedure of Figure 6.

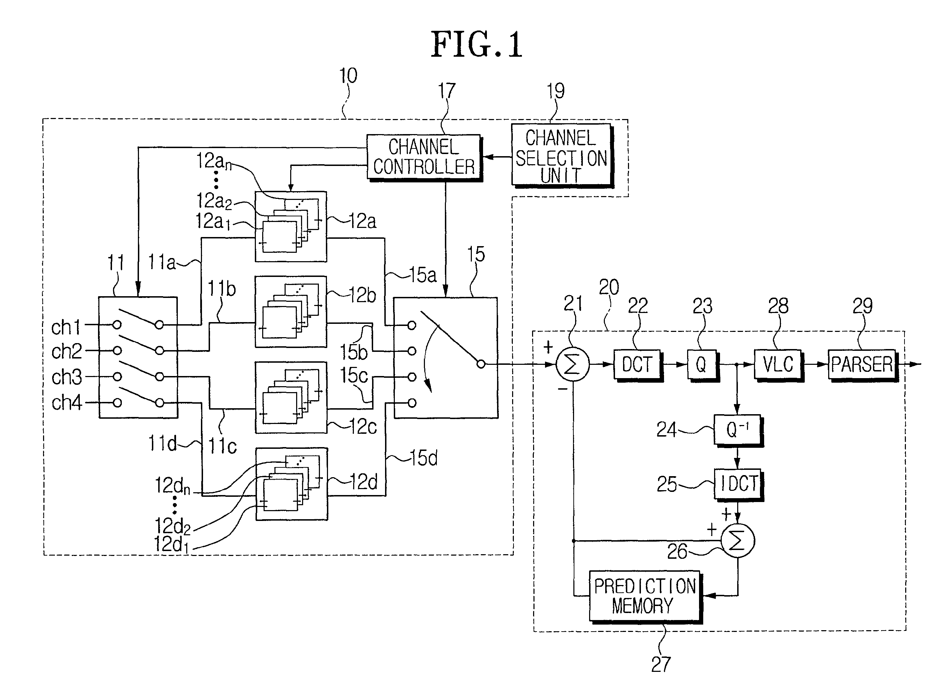

Referring to Figure 1, a multi-channel image encoding apparatus includes a channel data processor 10 and an encoder 20. The channel data processor 10 includes a multi-switch unit 11, first to fourth frame data buffer groups 12a, ..., 12d and an output multiplexer 15. The multi-switch unit 11 selectively connects a plurality of input channels Ch1 to Ch4 to corresponding frame data buffer groups 12a, ..., 12d. There is a frame buffer group for each input channel Ch1 to Ch4 Each frame data buffer group 12a, ..., 12d includes a plurality of frame buffers 12a₁, ..., 12aₙ, 12b₁, ..., 12bₙ, 12c₁, ..., 12cₙ, 12d₁, ..., 12dₙ for storing frame data. The number of frame buffers of a frame data buffer group is selected within so as to provide a desired compression rate, having regard to the attributes of input frames.

Each frame buffer 12a₁, ..., 12aₙ, 12b₁, ..., 12bₙ, 12c₁, ..., 12cₙ, 12d₁, ..., 12dₙ of the frame data buffer groups 12a, ..., 12d is connected to one of the outputs 11a, ..., 11d of the multi-switch unit 11 and one of the inputs 15a, ..., 15d of the output multiplexer 15 in accordance with a set-up circulation cycle.

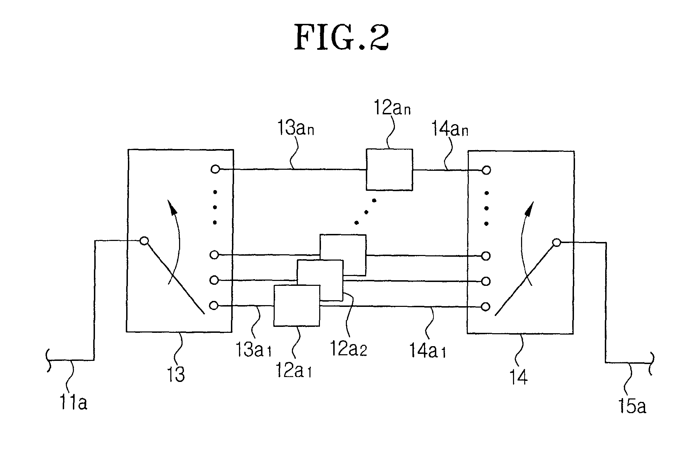

Referring to Figure 2, the first frame data buffer group 12a includes a first multiplexer 13 for selectively connecting the input channels 13a₁, ..., 13a_{*n*} of the frame buffers 12a₁, ..., 12a_{*n*} with the corresponding output 11a of the multi-switch unit 11, and a second multiplexer 14 for selectively connecting the outputs 14a₁, ..., 14a_{*n*} of the frame buffer 12a₁, ..., 12a_{*n*} with an input 15a of the output multiplexer 15. It is preferable that the switching cycle of the first multiplexer 13 and the second multiplexer 14 be controlled by a channel control unit 17.

The output multiplexer 15 selects each frame buffer group 12a, ..., 12d in turn and routes the outputs of the frame buffer groups 12a, ..., 12d to the encoder 20.

The channel data processor 10 operates the multi-switch unit 11 so that the frame data is transmitted in turn for each input channel, and outputs frame data stored in the frame data group 12a, ..., 12d for each channel in accordance with the state of the multi-switch unit 11. Then frame data for the same channel is output to the encoder 20 for a predetermined time, which is the switching period of the output multiplexer 15 and thus a stream structure having similar adjacent frames can be offered to the encoder. It is preferable that the switching period for each channel of the output multiplexer 15 be set up corresponding to a set-up GOP (group of pictures).

A channel selection unit 19 has a key for setting up a channel selection pattern with regard to the input channels. For example, the channel selection unit 19 includes a multi-channel uniform input pattern that cyclically selects between all or some of the input channels and applies a constant connection time for each channel. The channel selection unit 19 further includes a multi-channel variable input pattern that cyclically selects input channels, from among all or some of the channels, and applies the different connection times or selection rates for each channel. The channel selection unit 19 further includes a key for setting up one channel input pattern to select one channel.

The channel controller 17 controls the multi-switch unit 11, the output multiplexer 15 and the frame buffer groups 12a, ..., 12d in accordance with a mode set by the channel selection unit 19.

The channel controller 17 and the channel selection unit 19 may be omitted when the multi-channel image encoding apparatus evenly selects the channels in turn. In this case, the multi-switch unit 11 is switched at a constant frequency so that the frame data can be transmitted for each channel in turn, and the input of each frame buffer of the frame data buffer groups 12a, ..., 12d is switched so that each frame buffer can consecutively store data input for the corresponding channel through the multi-switch unit 11. Moreover, the output multiplexer 15 is switched to consecutively output frame data in regard to the same channels. The switch frequency of the output multiplexer 15 becomes relatively longer than the switch frequency of the first switch unit 11.

The channel data processor 10 stores signals being consecutively transmitted for each frame with regard to each input channel and consecutively outputs the frame data of the same channel, consecutively stored, to the encoder 20.

The encoder 20 applies a well-known method based on one of the MPEG-1, MPEG-2 or MPEG-4 standards.

Referring to Figure 1, the encoder 20 includes a subtracter 21, a discrete cosine transformer (DCT) 22, a quantizer 23, an inverse quantizer 24, an inverse discrete cosine transformer (IDCT) 25, an adder 26, and a prediction memory 27.

The subtracter 21 outputs the signal obtained by subtracting the previous frame, stored in the prediction memory 27, from current frame input from the output multiplexer 15.

The discrete cosine transformer (DCT) 22 performs discrete cosine transformation on the output of the subtracter 22 and the quantizer 23 quantizes the output of the discrete cosine transformer (DCT) 22. A variable length coder 28 removes statistical overlapping from the quantized signal and outputs the variable length encoded signal. A parser 29 outputs the signals output by the variable length encoder 28 with channel information.

The inverse quantizer 24 inversely quantizes the quantized signals, and the inverse discrete cosine transformer (IDCT) 25 decodes the inversely quantized signals by performing an inverse discrete cosine transform.

The inverse discrete cosine transformed signal is added to data previously stored in the prediction memory 27 by the summer 26 and the result is written to the prediction memory 27.

The encoder 20 can obtain a compression rate near to the one channel method, since the encoder 20 codes the frame data plurally input consecutively from the output multiplexer 15 in regard to the same channel by the MPEG method.

There is an advantage of using an encoding chip.

The encoder 20 can be set up to encode for each channel by GOP (group of picture) unit for grouping I, P, B picture, which are within the interval of I picture capable of random accessing in regard to picture type regulated by the MPEG-2 (defining the unit for encoding in accordance with the method for movement compensation), in other words, three types of pictures, which are I (intra coded), P (predicted coded), and B (bi-directionally predicted coded).

When an I picture is encoded there is no movement compensation. A P picture in regard to the present frame applies a forward movement compensation prediction method based on the I picture of the previous frame or the P picture of the previous frame. The B picture obtains three prediction signals by using a forward prediction screen that has compensated for the movement from I/P picture of the previous frame and the I/P picture of the next frame in regard to the present frame, a backward prediction scene, and a scene (a bi-directional prediction scene) that has interpolated back and forth. After that the B picture selects the most suitable signals among these prediction signals and uses as a prediction signal.

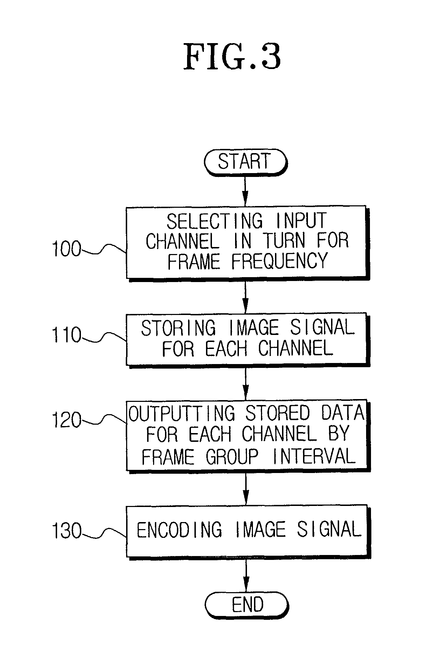

The encoding procedure of the multi-channel image encoding apparatus is shown in Figure 3.

First of all, the input channel is selected in turn in synchronism with the frame interval (step 100). Then, the image signals for each channel are stored separately (step 110).

The data stored for each channel is output with a frame group interval, set up for outputting a plurality of frames for each channel from the data stored the frame data group 12a, ..., 12d, for each channel in steps 100 and 110 (step 120).

Then, the encoder 20 codes the frame group, which comprises a plurality of frames from the same channel (step 130).

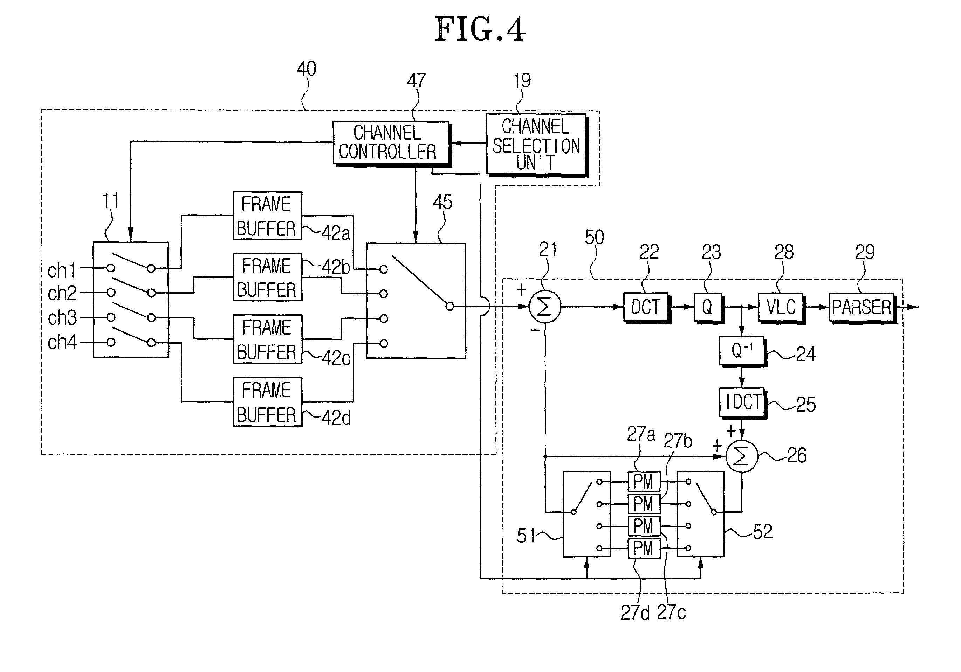

Referring to Figure 4, a second multi-channel image encoding apparatus includes a channel data processor 40 and an encoder 50.

The channel data processor 40 receives a plurality of channels and selectively outputs received image information from each channel.

The channel data processor 40 includes a multi-switch unit 11, frame data buffers 42a, ..., 42d and an output mulitplexer 45.

The multi-switch unit 11 connects the frame buffers 42a, ..., 42d to respective input channels in accordance with a set-up channel select pattern.

There is one frame buffers 42a, ..., 42d for each input channel ch1, ..., ch4.

The capacity of each frame buffer 42a, ..., 42d is selected in dependence on the signal process speed of the system.

It is preferable that the switching cycle of the multi-switch unit 11 and the switching cycle of the multiplexer 45 are set up to correspond to each other.

The multiplexer 45 selects each frame buffer 42a, ..., 42d corresponding to the channel selection of the multi-switch unit 11 and outputs data from the frame buffers 42a, ..., 42d to the encoder 50.

It is preferable that the multi-switch unit 11 and the multiplexer 45 are controlled by the channel controller 47 so that the input signal selection can be unevenly applied in accordance with a need or desirability therefor.

The channel controller 47 controls the multi-switch unit 11, the multiplexer 45 and a frame memory selection unit, which will be described below, in accordance with a mode selected by the channel selection unit 19.

The channel controller 47 and the channel selection unit 19 may be omitted if the switching cycle for the multi-switch unit 11 and the multiplier 45 is to be constant. In this case, the multi-switch unit 11 is switched according to a predetermined cycle so that the frame data for each channel is consecutively transmitted in turn, and the multiplexer 45 is switched so that frame data is consecutively output for each channel according to the same cycle as the multi-switch unit 11. The selection of a frame buffer by the multiplexer 45 is delayed with respect to the selection of the same frame buffer by the multi-switch unit 11.

The encoder 50 codes the frame data output in turn for each channel from the channel data processor 40 using the data stored in prediction memories 27a, ..., 27d provided respectively for each channel.

The encoder 50 includes the prediction memory selection unit 51 and 52 for selectively contacting the prediction memory 27 to contact the prediction memory unit 27 corresponding to the channel of the signals input through the multiplexer 45 between the adder 26 and subtractor 21.

The compression rate can be increased by using the similarity between the images of the same channel, as the image signals input in turn for each channel are encoded as described before using prediction memories 27a, ..., 27d provided for each channel.

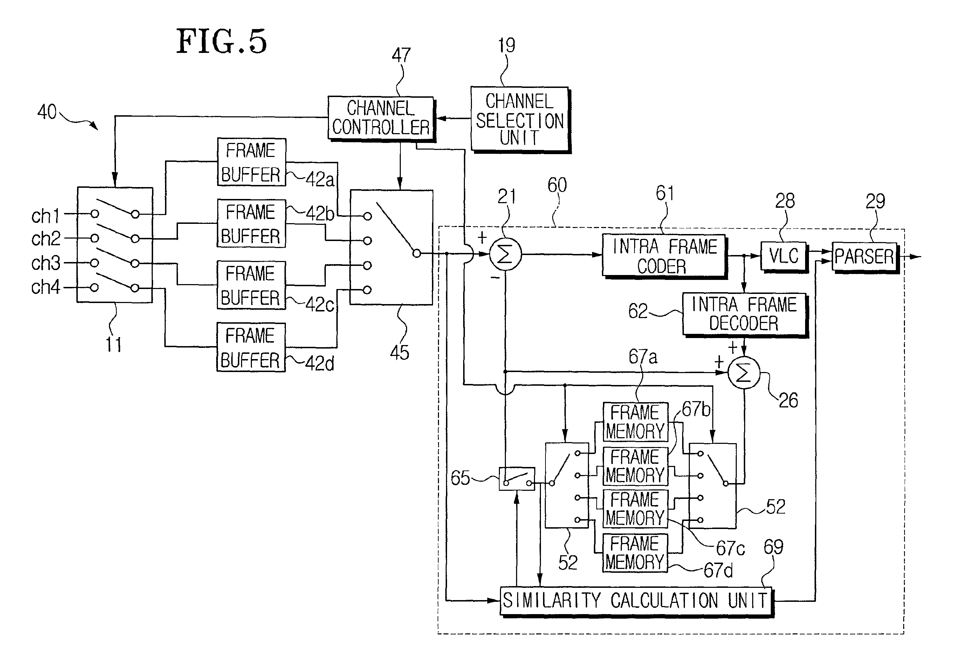

Referring to Figure 5, the multi-channel image encoding apparatus includes the channel data processor 40 and the encoder 60.

As described with reference to Figure 4, the channel data processor 40 outputs the data input in turn for each channel to the encoder 60 corresponding to the order of the input data. The encoder 60 includes a code unit and a similarity calculation unit 69. The code unit includes an intra frame coder 61, an intra frame decoder 62, a frame memory 67, an adder 26, a subtracter 21, and a frame memory selection unit 52.

The intra frame coder 61 encodes the input image signals according to an intra mode method. The intra frame coder 61 uses a wavelet or JPEG coder. The intra frame coder 61 codes the input data and outputs the coded data. The coded signal is decoded by the intra frame decoder 62. There is a frame memory 67a, ..., 67d for each input channel. The frame memory selection unit 52 selects a frame memory 67a, ..., 67d corresponding to the channel selected by the multiplexer 45.

The similarity calculation unit 69 compares the previous scene data stored in the frame memory 67a, ..., 67d with the corresponding signal input from the multiplexer 45, using a predetermined a macro block size, compares the result of this comparison with a set-up reference value, and processes the data to be encoded with one of a first mode or a second mode according to the second comparison result.

The first mode encodes the present frame data using the intra-coding method, and the second mode encodes the data gained by subtracting the previous data from the present data. The similarity calculation unit 69 output a flag signal corresponding to the decided encoding mode to the parser 29, and controls the switch unit 65 that selects a frame memory 67a, ..., 67d for connection to the subtracter 21.

In other words, the similarity calculation unit 69 outputs data that has been subtracted, such as the previous data of the frame memory 67 from the present data to the intra frame coder 61 to the subtracter, when the similarity of the macro block, which is compared, is greater than a set-up reference value. Moreover, the similarity calculation unit 69 encodes original signals of the corresponding macro block by opening the switch unit 65 thereby omitting a subtracting process before the intra frame coder 61, when the similarity of the macro block, which is compared, is less than the set-up reference value.

The similarity calculation unit 69 outputs flag 1, when the similarity, which is the information that indicates the type of the encoding mode when decoding, is greater than the reference value, and outputs flag 0, when the similarity is less than the reference value.

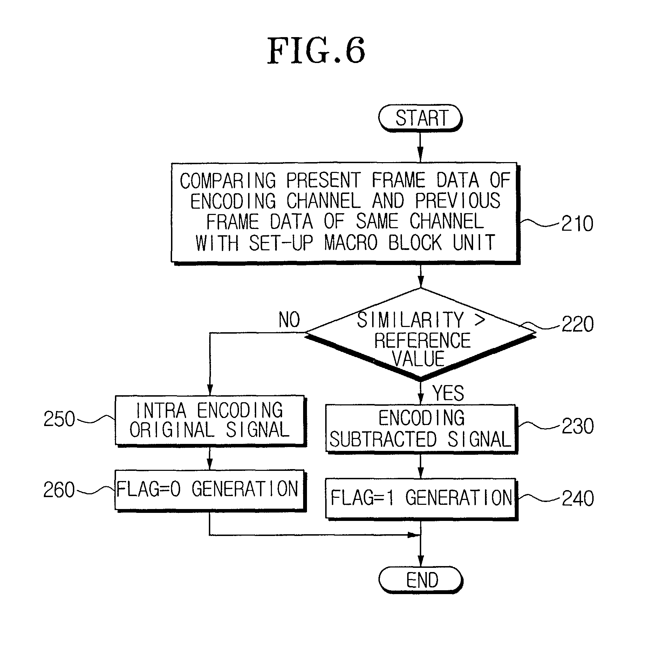

Figure 6 shows the encoding procedure of the multi-channel image encoding apparatus.

First of all, the present frame data of the channel that is being encoded and the previous frame data of the same channel are compared using the set-up macro block size (step 210).

In step 220, if the similarity is greater than the reference value, a signal, which is obtained by subtracting the data of the previous frame, is encoded (step 230).
Then, the flag is set to 1 and output (step 240).

In step 220, the original signal is intra-encoded (step 250), if the similarity is less than the reference value. Then, the flag is set to 0 (step 260).

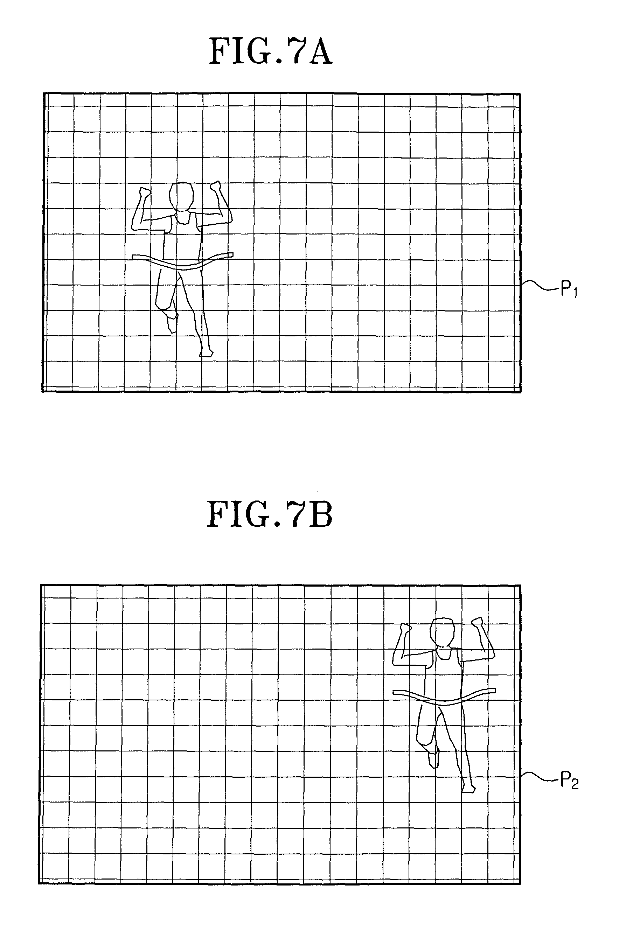

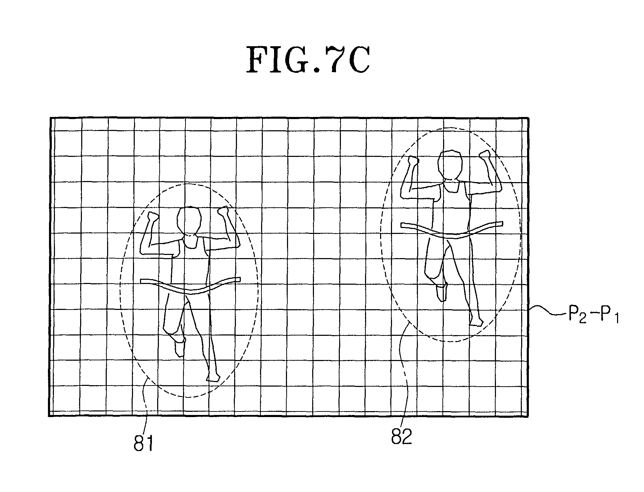

Figure 7C shows a scene (P₂-P₁) corresponding to the difference between scene (P1) corresponding to the previous frame, as shown in Figure 7A, and a screne (P2) corresponding to the present frame data, as shown in Figure 7B, according to the above encoding method. The cells in Figures 7A, 7B and 7C correspond to macro blocks.

In this case, the region of Figure 7B corresponding to two boundaries 81, 82 of a runner of Figure 7C is encoded by the intra coding without a subtracting process, and the rest of the macro block is encoded with regard to the signal by subtracting, which is most of the region data excluding the boundary region of Figure 7C. Therefore, a high compression rate will be gained, if the most part of the macro block having no changes between the previous screen and the present screen is encoded by subtracting.

As described so far, according to the multi-channel image encoding apparatus and the method thereof of the present invention, the signals for each channel input through the plurality of input channels regardless of the similarity between the channels are selected in turn and transmitted, and the compression rate can be increased, since the data of the same channels having the high similarity is compared and encoded.

## Claims

1. A method of producing a compressed multiplexed video signal, the method being **characterised by** performing MPEG coding of a multiplexed video signal such that the difference determining step of the MPEG coding always or predominantly involves frames from the same source.

2. A method according to claim 1, wherein the multiplexed video signal comprises bursts of frames from each source in turn.

3. A method according to claim 2, comprising cyclically storing frames of video signals from different sources in memories associated with respective ones of said sources and cyclically outputting said bursts of frames from said memories.

4. A method according to claim 1, comprising storing separate predictions for signals from each source and selecting the stored prediction corresponding to the source of the current frame for said difference determining step.

5. A method according to claim 4, comprising determining the degree of similarity between a current frame and the previous frame from the same source and, if the similarity does not meet a predetermined criteria, performing an alternative self-contained compression method on the current frame instead of said MPEG coding.

6. A method according to claim 5, including adding a code to the compressed multiplexed video signal to indicate which compressing method is being used.

7. An apparatus for producing a compressed multiplexed video signal, the apparatus being **characterised by** an MPEG coder (20; 50; 60) and memory means (12a, ..., 12d; 27a,..., 27d, 67a,..., 67d) configured for grouping video frame data according to source for the difference determining operating of the MPEG coder (20; 50; 60).

8. An apparatus according to claim 7, including a multiplexer (15), wherein the memory means (12a, ..., 12d) is configured for storing a plurality of frames from respective ones of said sources and the multiplexer (15) is configured to select each memory means (12a, ..., 12d) for sufficient time to allow for the output of a burst of frames therefrom to the MPEG coder (20).

9. An apparatus according to claim 7, wherein the memory means (27a, ..., 27d; 67a, ..., 67d) constitute prediction memories of the MPEG coder (50; 60), there being a respective prediction memory for each of said sources and means for selecting a prediction memory in dependence on the source of the current frame for providing a signal to the difference determining operation of the MPEG coder (50; 60).

10. An apparatus according to claim 9, comprising similarity determining means (69) for determining the degree of similarity between a current frame and the previous frame from the same source, additional coding means (60) for performing a self-contained compression method, and coding selection means (69) for selecting between said MPEG coder and said additional coding means in dependence on the output of the similarity determining means (69).

11. An apparatus according to claim 10, wherein the coding selection means (69) is configured to generate a code for indicating which compressing method is being used.

12. A multi-channel image encoding apparatus for selectively receiving image signals transmitted through a plurality of input channels and encoding the image signals, comprising:
a channel data processor comprising a frame buffer group including a plurality of frame buffers for each input channel in order to receive a plurality of frame data through the plurality of input channels and to store the plurality of frame data, the channel data processor for selecting data transmitted to the frame buffer group to output the selected data; and
an encoder for encoding image signals output from the channel data processor with a Moving Picture Experts Group method.

13. The multi-channel image encoding apparatus of claim 12, further comprised of the channel data processor storing each unit of the frame data into the frame buffer group corresponding to each channel in accordance with a set-up input channel selection order, and outputting the plurality of frame data stored in the frame buffer group to the encoder for each channel.

14. The multi-channel image encoding apparatus of claim 12, with the channel data processor comprising:
a first multi-switch unit for selectively contacting each of the input channels with the frame buffer group of corresponding to each of the input channels; and
a second multi-switch unit for selectively contacting with the frame buffer group and outputting data output from the frame buffer group to the encoder.

15. The multi-channel image encoding apparatus of claim 14, further comprised of the first multi-switch unit storing each unit of the frame data into the frame buffer group corresponding to the input channels in accordance with a set-up input channel selection order, and the second multi-switch unit contacting with the frame buffer group in accordance with a set-up channel contact order and outputting the plurality of frame data stored in the contacted frame buffer group for each of the input channels.

16. The multi-channel image encoding apparatus of claim 15, with the encoder comprising:
a discrete cosine transformer for performing a discrete cosine transform with respect to the image signals input from the second multi-switch unit;
a quantizer for quantizing signals output from the discrete cosine transformer and outputting the quantized signals;
an inverse quantizer for inversely quantizing the quantized signals;
an inverse discrete cosine transformer for performing an inverse discrete cosine transform with respect to the inversely quantized signals;
a prediction memory;
an adder for adding data output from the prediction memory and the inversely discrete cosine transformed data, and outputting the added data to the prediction memory; and
a subtracter for subtracting data output from the prediction memory from signals input through the second multi-switch unit, and outputting the subtracted signal to the discrete cosine transformer.

17. The multi-channel image encoding apparatus of claim 16, with the encoder further comprising:
a variable length encoder for performing a variable length encoding with respect to signals output from the quantizer, and outputting the encoded signals; and
a parser for loading channel information about each frame to signals output from the variable length encoder, and outputting the signals.

18. The multi-channel image encoding apparatus of claim 14, further comprising:
a channel selection unit including a key for setting up a channel select pattern in regard to the plurality of input channels; and
a channel controller for controlling the first multi-switch unit and the second multi-switch unit in accordance with the channel select pattern set up by the channel selection unit.

19. An encoding method of a multi-channel image encoding apparatus for selectively receiving image signals transmitted through a plurality of input channels and encoding the image signals, comprising the steps of:
selecting the input channels in accordance with a set-up order to receive a unit frame data for the input channels;
storing the signals input through the selected input channels;
outputting the plurality of frame data stored for each channel in accordance with a set-up selection order; and
encoding a plurality of frame data output for each channel.

20. A multi-channel image encoding apparatus for encoding image signals input through a plurality of input channels, comprising:
a channel data processor for selectively contacting with the plurality of input channels and selectively outputting transmitted image signals for each of the input channels; and
an encoder for encoding signals output from the channel data processor by using a previous frame data stored in a prediction memory provided for each corresponding channel.

21. The multi-channel image encoding apparatus of claim 20, with the channel data processor comprising:
a first multi-switch unit for selectively contacting the input channels with frame buffer corresponding to each of the input channels; and
a second multi-switch unit for selectively contacting with the frame buffer and outputting data output from the frame buffer to the encoder.

22. The multi-channel image encoding apparatus of claim 21, with the encoder comprising:
a discrete cosine transformer for performing a discrete cosine transform with respect to the input image signals;
a quantizer for quantizing signals output from the discrete cosine transformer:
an inverse quantizer for inversely quantizing the quantized signals;
an inverse discrete cosine transformer for performing an inverse discrete cosine transform with respect to the inversely quantized signals;
an adder for adding data output from the selected prediction memory and the inversely discrete cosine transformed data, and outputting the added data to the prediction memory of corresponding channels;
a subtracter for subtracting data output from the prediction memory from signals input through the second multi-switch unit, and outputting the subtracted signal to the discrete cosine transformer; and
a prediction memory selection unit for controlling the prediction memory of channels corresponding to the selected channels by the second multi-switch unit to be contacted between the adder and the subtracter.

23. The multi-channel image encoding apparatus of claim 22, with the encoder comprising:
a variable length encoder for performing a variable length encoding with respect to signals output from the quantizer; and
a parser for loading channel information about each frame to signals output from the variable length encoder, and outputting the signals.

24. The multi-channel image encoding apparatus of claim 22, further comprising:
a channel selection unit having a key for setting up a channel select pattern in regard to the plurality of input channels; and
a channel controller for controlling the first multi-switch unit, the second multi-switch unit, and the prediction memory in accordance with the channel select pattern set up by the channel selection unit.

25. An encoding method of multi-channel image encoding apparatus for selectively receiving image signals transmitted through a plurality of input channels and encoding the image signals, comprising the steps of:
outputting unit frame data transmitted corresponding to the set-up input channel selection order for each channel to the encoder;
selecting a prediction memory of channels corresponding to the input unit frame data among the prediction memory with numbers corresponding to the number of the input channels; and
encoding by using the data previously stored in the prediction memory and frame data of the current input channel.

26. A multi-channel image encoding apparatus for encoding image signals input through a plurality of input channels, comprising:
a channel data processor for selectively contacting with the plurality of input channels and selectively outputting transmitted image information for each of the input channels; and
an encoder for calculating a similarity by comparing image signals output from the channel data processor and the previous frame data stored in the frame memory provided for corresponding channels, and selecting one mode among a plurality of encoding modes set up differently for each other in regard to the present frame data in accordance with the calculated similarity and encoding according to the selected encoding mode.

27. The multi-channel image encoding apparatus of claim 26, with the plurality of encoding modes comprising:
a first mode for encoding the present frame data with an intra coding method; and
a second mode for encoding data gained by subtracting the previous frame data from the present frame data.

28. The multi-channel image encoding apparatus of claim 27, with the encoder comprising:
an encode unit for encoding; and
a similarity calculation unit for determining a corresponding encoding mode by calculating the similarity, controlling the encode unit to perform the determined encoding mode, and outputting determined encoding mode information.

29. The multi-channel image encoding apparatus of claim 26, with the data processor comprising:
a first multi-switch unit for selectively contacting each of the input channels with frame buffer of corresponding channels; and
a second multi-switch unit for selectively contacting with the frame buffer, and outputting data output from the frame buffer to the encoder.

30. The multi-channel image encoding apparatus of claim 29, with the encoder comprising:
an intra frame coder for intra coding with respect to input image signals;
an intra frame decoder for decoding with respect to signals output from the intra frame coder;
an adder for adding data output from the selected frame memory and data output from the intra frame decoder, and outputting the added data to the frame memory of corresponding channels;
a subtracter for subtracting data output from the selected frame memory from signals input through the second multi-switch unit and outputting the subtracted signal to the intra frame coder; and
a frame memory selection unit for controlling the frame memory of channels corresponding to channels selected by the second multi-switch unit in order to be contacted between the adder and the subtracter by being controlled by the similarity calculation unit.

31. The multi-channel image encoding apparatus of claim 28, further comprised of the similarity calculation unit calculating a similarity by comparing previous screen data stored in the selected frame memory by the frame memory selection unit and frame data of a selected channel by the second multi-switch unit with a set-up macro block unit, and determining an encoding mode with the macro block unit.

32. The multi-channel image encoding apparatus of claim 31, further comprised of the similarity calculation unit determining a calculated similarity as the first mode, when the calculated similarity is greater than a set-up reference value, and as the second mode, when the calculated similarity is less than a set-up reference value.

33. The multi-channel image encoding apparatus of claim 30, further comprising:
a channel selection unit for setting up a channel select pattern to encode in regard to the plurality of input channels; and
a channel controller for controlling the first multi-switch unit, the second multi-switch unit, and the frame memory selection unit to encode received images in accordance with a channel select pattern selected by the channel selection unit.

34. An encoding method of multi-channel image encoding apparatus for selectively receiving image signals transmitted through a plurality of input channels and encoding the image signals, comprising the steps of:
outputting unit frame data for each channel to the encoder by selecting the input channels in accordance with a set-up encode order;
selecting frame memory of channels corresponding to input unit frame data among frame memory having numbers corresponding to the number of input channels;
calculating a similarity by comparing data previously stored in selected frame memory with frame data of currently inputted channels; and
encoding the present frame data by intra coding method, when the similarity is less than a set-up reference value.

35. The encoding method of multi-channel image encoding apparatus of claim 34, further comprised of the similarity being greater than the reference value, then data gained by subtracting previous data from present data is encoded.

36. The encoding method of multi-channel image encoding apparatus of claim 34, further comprised of the similarity calculation being performed with a set-up macro block unit.
